# EUROPÄISCHE PATENTSCHRIFT

(11) **EP 2 793 542 B1**
(45) Veröffentlichungstag und Bekanntmachung des Hinweises auf die Patenterteilung: **03.02.2016**
(21) Anmeldenummer: 12829152.3
(22) Anmeldetag: 20.12.2012
(51) Int. Cl.: A01B 17/00, A01B 3/46, A01B 49/02

(54) **INTEGRIERTES BODENBEARBEITUNGSGERÄT FÜR DREHPFLÜGE**
INTEGRATED SOIL-TILLING APPARATUS FOR ROTARY PLOUGHS
APPAREIL POUR LE TRAVAIL DU SOL INTÉGRÉ POUR CHARRUE BRABANT

(30) Priorität: 21.12.2011 DE 102011122537
(43) Veröffentlichungstag der Anmeldung: 29.10.2014
(73) Patentinhaber: Lemken GmbH & Co. KG, 46519 Alpen (DE)
(72) Erfinder: MEURS, Wilhelm, 46519 Alpen (DE)
(74) Vertreter: Schulte & Schulte
(86) Internationale Anmeldenummer: PCT/DE2012/001216
(87) Internationale Veröffentlichungsnummer: WO 2013/091608

(56) Entgegenhaltungen:
- EP-A1- 0 428 087
- EP-B1- 0 857 407
- DE-A1- 2 051 599
- DE-A1- 4 408 715

## Beschreibung

Die Erfindung betrifft ein integriertes Bodenbearbeitungsgerät für Drehpflüge gemäß dem Oberbegriff des Patentanspruches 1.

Integrierte Bodenbearbeitungsgeräte für Drehpflüge sind am Drehpflug angebaute und mitgeführte Geräte, die den gepflügten Boden des Drehpfluges bearbeiten und während des Wendevorganges auf dem Vorgewende und auch für Transportfahrten auf Wegen und Straßen am Drehpflug verbleiben können. Sie brauchen während der Arbeit vor dem Wendevorgang nicht abgekuppelt und nach dem Wendevorgang nicht wieder gefangen und auch nicht für Transportfahrten separat transportiert zu werden. Derartige integrierte Bodenbearbeitungsgeräte weisen in der Regel Mittel auf, die es ermöglichen, dass das integrierte Bodenbearbeitungsgerät für die erste Überfahrt bzw. die erste Pflugfurche am Feldrand nicht stört, also eingeschwenkt oder hoch geschwenkt wird. Üblicherweise weisen derartige integrierte Bodenbearbeitungsgeräte zinkenförmige oder ringförmige Werkzeuge auf, die über ihre Träger nach vorne und hinten schwenkbar und seitlich am Pflugrahmen angeordnet und in ihrer Längsrichtung einstellbar sind. Das europäische Patent EP 428 087 B1 zeigt ein integriertes Bodenbearbeitungsgerät, das mit messerartigen Werkzeugen ausgerüstet ist, aber gemäß Beschreibung auch zum Beispiel mit Profilstäben oder Scheibenrädern ausgerüstet sein kann. Über parallele Träger, die nach vorne oder nach hinten schwenkbar ausgebildet sind, kann der Längsrahmen des integrierten Bodenbearbeitungsgerätes mit seinen Werkzeugen in unterschiedliche Längsstellungen verschwenkt werden. Über längenveränderbare Träger mit Klemmtaschen kann das integrierte Bodenbearbeitungsgerät an vorhandene Pflugrahmen angeklemmt oder angeschraubt werden. Abhängig vom Pflugrahmen werden die Träger in eine passende Position geschoben und dann am Pflugrahmen fixiert. Der Längsrahmen des integrierten Bodenbearbeitungsgerätes ist in Längsrichtung verschiebbar, um ein Einstellen der Werkzeugposition der Werkzeuge zu ermöglichen. Für die erste Furche am Feldrand kann ein Teil des Längsrahmens eingeschwenkt werden, so dass es nicht übersteht und der Boden bis zur Ackergrenze bearbeitet werden kann. Allerdings wird der Boden in diesem Bereich mehrfach bearbeitet, da alle eingeschwenkten vorderen Werkzeuge hintereinander arbeiten. Das zusätzliche Gelenk im Längsrahmen schwächt den Längsrahmen bzw. erfordert einen zusätzlichen baulichen Aufwand. Das europäische Patent EP 857 407 B1 zeigt ein vergleichbares Gerät, bei dem der Längsrahmen ebenfalls parallel in Längsrichtung verschwenkt oder verschoben werden kann. Anders als bei der EP 428 087 können hier auch messerförmige Werkzeuge eingesetzt werden, die auf einer Längswelle drehbar angeordnet sind. Eine Ausführung dieses Patentes zeigt Scheibenräder als Werkzeuge, die über die parallel angeordneten Träger horizontal verschwenkbar sind. Wenn zum Beispiel für die erste Furche der Längsrahmen nach hinten geschwenkt oder geschoben wird, erhöht sich der Hubkraftbedarf des Drehpfluges. Wird der Längsrahmen nach der ersten Überfahrt am Feldrand wieder nach vorne in eine schwerpunktgünstige Position geschwenkt, wird der Boden teilweise doppelt bearbeitet. Das ist in der Regel unerwünscht.

Aufgabe der Erfindung ist es, ein integriertes Bodenbearbeitungsgerät zu schaffen, das einfach eingeschwenkt werden kann und eine doppelte Bearbeitung des Bodens weitestgehend verhindert, das einfach und störungsfrei beim Drehvorgang des Drehpfluges umgeschwenkt und bei dem die Druckbelastung auf die ringförmigen Werkzeuge einfach verändert werden kann.

Diese Aufgabe wird mit den Merkmalen des kennzeichnenden Teiles des Patentanspruches 1 gelöst.

Durch diese Art der Einschwenkung verändert sich die Lage des hinteren Werkzeuges in Relation zur Furchenkante der letzten Furche praktisch nicht oder nur unwesentlich. Wenn nach der ersten Überfahrt am Feldrand der zurück geschwenkte Längsrahmen wieder in seine vordere schwerpunktgünstige Arbeitsposition geschwenkt wird, schließt er direkt konturgenau an der Grenze der ersten Überfahrt an. Streifenweise Doppelbearbeitungen oder Mehrfachbearbeitungen des Bodens werden so sehr gut verhindert.

In einer bevorzugten Ausführungsform ist vorgesehen, dass die Lenker als Doppellenker mit oberem Lenker und unterem Lenker ausgebildet sind, die in Arbeitsstellung annähernd parallel zueinander übereinander liegend angeordnet sind und über ein Einstellzentrum für den Drehvorgang in eine mittlere Strecklage bringbar und für die Pflugarbeit mit einer abwärts gerichteten Druckkraft beaufschlagbar ausgebildet sind, wobei die Druckkraft vorzugsweise veränderbar ist. Durch diese Ausbildung der Lenker wird das integrierte Bodenbearbeitungsgerät bei vertikalen Schwenkbewegungen vertikal parallel geführt. Zusätzlich wird das integrierte Bodenbearbeitungsgerät für den Drehvorgang in eine symmetrische, fest geführte Mittellage gebracht, die ein unkontrolliertes Schwingen und Pendeln des Längsrahmens während des Drehvorganges verhindert. Über das Einstellzentrum, das einen doppelt wirkenden Hydraulikzylinder aufweist, kann auch auf die ringförmigen Werkzeuge eine Druckbelastung erzeugt werden, die eine gute Bodenbearbeitung und Rückverfestigung des Bodens sicherstellt.

Weitere Einzelheiten der Erfindung sind den Figuren und der Figurenbeschreibung zu entnehmen. Es zeigen:
- Figur 1: das integrierte Bodenbearbeitungsgerät an einem Drehpflug angebaut in einer schwerpunktgünstigen Arbeitsstellung,
- Figur 2: das integrierte Bodenbearbeitungsgerät in einer schwerpunktungünstigen Stellung, die für die erste Pflugfurche gedacht ist und
- Figur 3: einen Doppellenker mit Einstellzentrum des integrierten Bodenbearbeitungsgerätes.

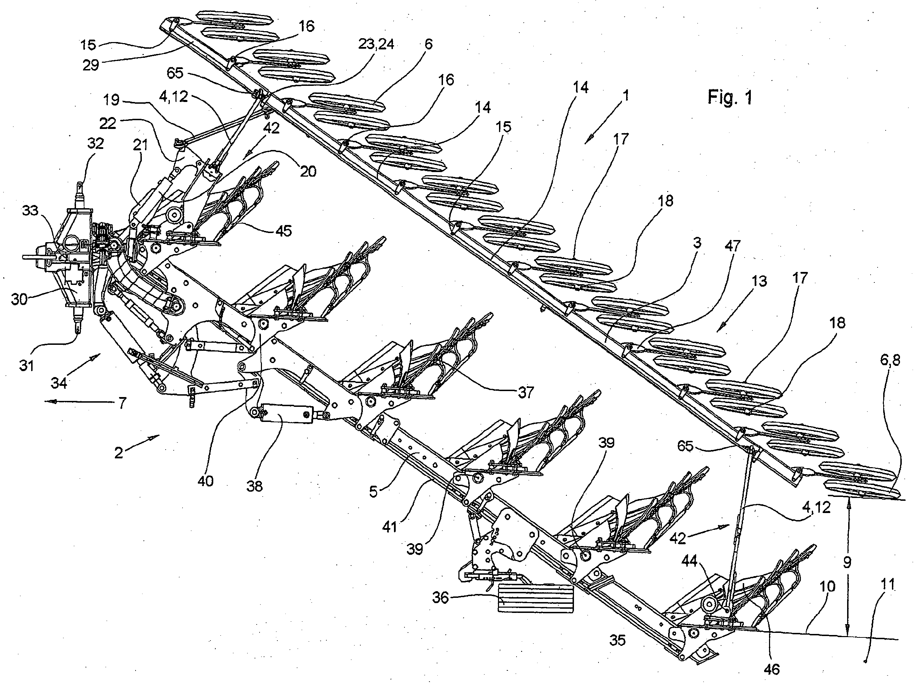

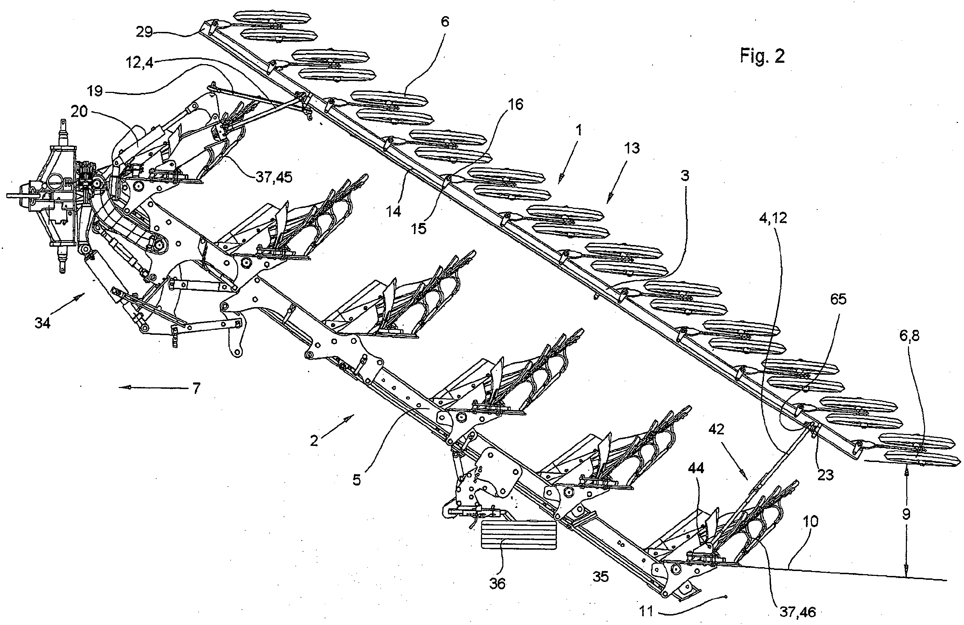

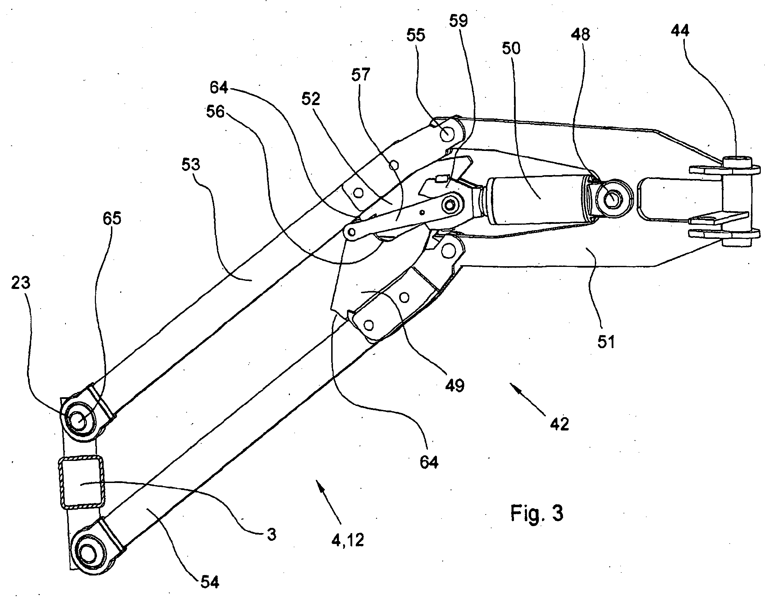

Figur 1 zeigt einen Drehpflug 2, der mit seinem Pflugturm 30 über die Anlenkpunkte 31,32 und 33 mit dem Dreipunktgestänge eines nicht dargestellten Traktors verbunden werden kann und der im hinteren Bereich 35 ein Stützrad 36 aufweist. Der Drehpflug 2 weist ein Lenkergetriebe 34 auf, mit dem unter anderem die Vorderfurchenbreite sowie der Zugpunkt eingestellt und der Pflugrahmen 5 eingeschwenkt werden können, worauf aber im weiteren Verlauf dieser Figurenbeschreibung nicht näher eingegangen wird. Der Drehpflug 2 weist weiter den Pflugrahmen 5 auf, an dem die Pflugkörper 37 mittelbar über die Schwenkkonsolen 40 befestigt und um die Schwenkachsen 39 in ihrer Arbeitsbreite einstellbar sind. Die Einstellung der Arbeitsbreite der Pflugkörper 37 und damit des gesamten Drehpfluges 2 erfolgt über den Hydraulikzylinder 38. Dabei sind die Schwenkkonsolen 40 der einzelnen Pflugkörper 37 über eine Steuerstange 41 miteinander verbunden. Sowohl an der Schwenkkonsole 40 des ersten Pflugkörpers 45 als auch an der Schwenkkonsole 40 des hinteren Pflugkörpers 46 sind Schwenklager 44 angeordnet. Die Schwenklager 44 nehmen hier jeweils einen Lenker 4 auf, der horizontal schwenkbar ausgebildet ist. Die Lenker 4 weisen endseitig Kugelgelenke 23 oder Kreuzgelenke 24 auf, über die sie mit dem Stehbolzen 65 des Längsrahmens 3 des integrierten Bodenbearbeitungsgerätes 1 in Verbindung stehen. Am Längsrahmen 3 sind ringförmige Werkzeuge 6 um vertikale Gelenkachsen 16 begrenzt schwenkbar angeordnet. Im Abstand zu den vertikalen Gelenkachsen 16 weisen die Arme 47 Gelenkpunkte 15 auf, die gruppenweise über Verbindungslenker 14 miteinander verbunden sind. Die ringförmigen Werkzeuge 6 sind als Ringpaare 13 ausgebildet, deren horizontale Achsen 17 und 18 in Arbeitsrichtung 7 versetzt zueinander angeordnet sind. Die versetzte Anordnung der ringförmigen Werkzeuge 6 verhindert ein Zusetzen der ringförmigen Werkzeuge 6 insbesondere in klebrigen Bodenverhältnissen. Die Verbindungslenker 14 sorgen dafür, dass die Ringpaare 13 störungsfrei geführt werden. In Arbeitsrichtung 7 gesehen befindet sich vorne am Pflugrahmen 5 die Konsole 21, an die der Hydraulikzylinder 20 angreift. Der Hydraulikzylinder 20 greift auch an einen Hebel 22 an, der sich gegen den Lenker 4 abstützt und über den Zuglenker 19 mit dem Längsrahmen 3 gelenkig verbunden ist. Über den Hydraulikzylinder 20 kann der Längsrahmen 3 mit den ringförmigen Werkzeugen 6 in die Arbeitsposition gemäß Figur 1 oder in die Position für die erste Pflugfurche am Feldrand gemäß Figur 2 verschwenkt werden. Dabei wird für die erste Pflugfurche nur der vordere Teil 29 des Längsrahmens zum Drehpflug 2 hingeschwenkt und der Abstand 9 der hinteren ringförmigen Werkzeuge 8 zur Furchenkante 10 der hinteren Pflugfurche 11 bleibt annähernd gleich. Die Lenker 4 sind als Doppellenker 12 ausgebildet, die während der Arbeit ein paralleles Schwenken des integrierten Bodenbearbeitungsgerätes in vertikaler Richtung ermöglichen, die aber auch über das Einstellzentrum 42 für den Drehvorgang in eine feste Mittelstellung bzw. Strecklage gebracht werden können und auch während der Pflugarbeit für die Rückverfestigung des Bodens unterschiedlich eingestellt werden können. Dies ist insbesondere der Beschreibung zur Figur 3 zu entnehmen. Die Verschwenkbarkeit des Längsrahmens 3 sowohl in vertikaler als auch horizontaler Richtung wird durch die Kugelgelenke 23 bzw. Kreuzgelenke 24 der Lenker 4 bzw. Doppellenker 12 ermöglicht, die mit dem Stehbolzen 65 des Längsrahmens 3 in Verbindung stehen.

In Figur 2 ist die Arbeitsstellung des integrierten Bodenbearbeitungsgerätes 1 für die erste Pflugfurche am Feldrand dargestellt. Dabei ist der vordere Teil 29 des Längsrahmens 3 nach hinten und zum Pflugrahmen hin verschwenkt worden. Der Abstand 9 des hinteren ringförmigen Werkzeuges 8 zur Furchenkante 10 der hinteren Pflugfurche 11 hat sich dabei nicht oder nur geringförmig geändert. Die Lenker 4 bzw. die Doppellenker 12 sind dabei so konvergierend angeordnet, dass diese beiden Arbeitsstellungen für die erste Pflugfurche und für die restlichen Pflugfurchen in vorteilhafter Weise eingestellt werden können.

Figur 3 zeigt den Lenker 4 bzw. den Doppellenker 12, der aus dem Schwenkträger 51 besteht sowie aus dem oberen Lenker 53 und dem unteren Lenker 54, die über die Gelenke 55 mit dem Schwenkträger 51 hier auf dessen linker Seite verbunden sind, während der Schwenkträger 51 an seinem gegenüberliegenden, hier am rechten Ende ein horizontales Schwenklager 44 aufweist Der Schwenkträger 51 mit oberem Lenker 53 und unterem Lenker 54 bildet praktisch den Lenker 4 bzw. den Doppellenker 12. Dieser Lenker 4 bzw. Doppellenker 12 ist über das Schwenklager 44 in Arbeitsstellung horizontal schwenkbar mit dem Pflugrahmen 5 bzw. mit den Schwenkkonsolen 40 des Drehpfluges 2 verbunden. Über die Gelenke 55 sind der obere Lenker 53 und der untere Lenker 54 und damit auch der Längsrahmen 3 vertikal schwenkbar mit dem Schwenkträger 51 verbunden. Der obere Lenker 53 und der untere Lenker 54 sind hier über Kugelgelenke 23 mit dem Stehbolzen 65 des Längsrahmens 3 verbunden. Der doppelt wirkende Hydraulikzylinder 50 ist über die Gelenkachse 48 mit dem Schwenkträger 51 verbunden. Mit der Zylindergabel mit Anschlagbuchse 59 und dem Zuglenker 57 wird das integrierte Bodenbearbeitungsgerät 1 in eine Strecklage für den Drehvorgang gebracht oder während der Pflugarbeit mit Druck belastet. Wird der doppelt wirkende Hydraulikzylinder 50 ausgefahren, bringt er den oberen Lenker 53 und den unteren Lenker 54 in eine bodenparallele Strecklage. Der doppelt wirkende Hydraulikzylinder 50 fährt dabei so weit aus, bis er am Druckanschlag 56 der zweiten Anschlagplatte 49 und der ersten Anschlagplatte 52 anliegt. Das integrierte Bodenbearbeitungsgerät 1 ist jetzt fest fixiert und kann jetzt während des Drehvorganges nicht unkontrolliert hin- und herschwenken. Nach dem Drehvorgang des Pflugrahmens 5 fährt der doppelt wirkende Hydraulikzylinder 50 ein, wodurch der Längsrahmen 3 bzw. die ringförmigen Werkzeuge 6, 8 wieder abgesenkt werden. Über den Zuglenker 57 und die erste Anschlagplatte 52 wird in Abhängigkeit von der eingestellten Kraft des doppelt wirkenden Hydraulikzylinders 50 der obere Lenker 53 nach unten bewegt. Der obere Lenker 53 drückt dabei den Längsrahmen 3 mit dem ringförmigen Werkzeug 6, 8 in Richtung Boden, der dadurch gekrümelt und rückverfestigt wird. Nach dem Drehvorgang befinden sich der Zuglenker 57, der obere Lenker 53 und der untere Lenker 54 in einer gegenüberliegenden Arbeitsstellung. Der untere Lenker 54 befindet sich dann in der Position des oberen Lenkers 53 und umgekehrt. Wenn der doppelt wirkende Hydraulikzylinder 50 auf Zug belastet wird, zieht er den Zuglenker 57 wechselweise gegen den Zuganschlag 64 der ersten Anschlagplatte 52 oder gegen den Zuganschlag 64 der zweiten Anschlagplatte 49.

## Patentansprüche

1. Integriertes Bodenbearbeitungsgerät (1) für Drehpflüge (2), das mit seinem Längsrahmen (3) über Lenker (4) horizontal schwenkbar seitlich am Pflugrahmen (5) angeordnet ist, wobei am Längsrahmen (3) ringförmige Werkzeuge (6) angeordnet sind, die den bereits gepflügten Boden bearbeiten,
**dadurch gekennzeichnet,**
**dass** mindestens zwei Lenker (4) vorgesehen sind, die begrenzt horizontal und vertikal schwenkbar ausgebildet sind und in Arbeitsstellung des Drehpfluges (2) in Draufsicht zueinander konvergierend angeordnet sind, und zwar derart, dass von einer ersten Arbeitsstellung ausgehend für eine zweite Arbeitsstellung das integrierte Bodenbearbeitungsgerät (1) vorne so entgegen der Arbeitsrichtung (7) in Richtung Pflugrahmen (5) nach hinten eingeschwenkbar ist, dass ein grenznahes Bearbeiten des Bodens ermöglicht wird und das integrierte Bodenbearbeitungsgerät (1) hinten so verschwenkbar ist, dass das hintere ringförmige Werkzeug (6, 8) des integrierten Bodenbearbeitungsgerätes (1) den seitlichen Abstand (9) zur Furchenkante (10) der hinteren Pflugfurche (11) weitestgehend beibehält.

2. Integriertes Bodenbearbeitungsgerät nach Anspruch 1,
**dadurch gekennzeichnet,**
**dass** die Lenker (4) als Doppellenker (12) mit oberem Lenker (53) und unterem Lenker (54) ausgebildet sind, die in Arbeitsstellung annähernd parallel zueinander übereinander liegend angeordnet sind und über ein Einstellzentrum (42) für den Drehvorgang in eine mittlere Strecklage bringbar und für die Pflugarbeit mit einer abwärts gerichteten Druckkraft beaufschlagbar ausgebildet sind, wobei die Druckkraft vorzugsweise veränderbar ist.

3. Integriertes Bodenbearbeitungsgerät nach Anspruch 1,
**dadurch gekennzeichnet,**
**dass** der obere Lenker (53) und der untere Lenker (54) gelenkig mit einem Schwenkträger (51) verbunden sind, der seinerseits an seinem gegenüberliegenden Ende ein horizontales Schwenklager (44) aufweist.

4. Integriertes Bodenbearbeitungsgerät nach Anspruch 1,
**dadurch gekennzeichnet,**
**dass** der obere Lenker (53) und der untere Lenker (54) über Kugelgelenke (23) mit dem Stehbolzen (65) des Längsrahmens (3) verbunden sind.

## Claims

1. The integrated soil tillage unit (1) for reverse ploughs (2), which is designed with its longitudinal frame (3) horizontally swivel-mounted via the control lever (4) laterally on the plough frame (5), whereby ring-shaped tools (6) that process the already ploughed soil are located at the longitudinal frame (3),
**is characterised by**
at least two control levers (4), which are designed with limited horizontal and vertical swivelling and converging in the operating position of the reverse plough (2) in top view, and in such a manner that, starting from an initial operating position, the integrated soil tillage unit (1) can be swivelled forwards for a second operating position against the direction of operation (7) in the direction of the reverse plough (5) in such a manner that soil processing is possible close to the boundary, und the integrated soil tillage unit (1) can be swivelled back in such a manner that the rear ring-shaped tool (6, 8) of the integrated soil tillage unit (1) more or less maintains the lateral distance (9) to the groove edge (10) of the rear plough groove (11).

2. Integrated soil tillage unit in accordance with Claim 1
**is characterised by**
the fact that the control levers (4) are designed as a double lever (12) with an upper control lever (53) and a lower control lever (54), which in operating position are located roughly parallel above one another and can be brought into a central extended position via an adjustment centre (42) and loaded with a downward compressive force for the turning process and for the ploughing work, whereby it is preferred that the compressive force be adjustable.

3. Integrated soil tillage unit in accordance with Claim 1
**is characterised by**
the upper control lever (53) and the lower control lever (54) being agilely connected with a swivel base (51), which itself features a horizontal swivel bearing (44) at its opposite end.

4. Integrated soil tillage unit in accordance with Claim 1
**is characterised by**
the upper control lever (53) and the lower control lever (54) being connected with the stay bolts (65) of the longitudinal frame (3) via ball joints (23).

## Revendications

1. Machine de travail du sol intégrée (1) pour charrues réversibles (2), qui est disposée avec son cadre longitudinal (3) par-dessus le guidon (4) horizontal, sur le côté du cadre de charrue (5) de façon pivotable, sachant que des outils en forme d'anneau (6) travaillant le sol déjà labouré sont disposés sur le cadre longitudinal (3),
**caractérisée par le fait**
**qu'**au moins deux guidons (4) sont prévus, qui sont réalisés de façon à pouvoir pivoter de façon limitée dans le sens horizontal et vertical et sont disposés de façon à converger l'un vers l'autre en vue de dessus lorsque la charrue réversible (2) se trouve en position de travail, à savoir de telle manière qu'en partant de sa première position de travail pour une seconde position de travail, la machine de travail du sol (1) intégrée à l'avant peut être ainsi basculée vers l'arrière dans le sens contraire à celui du travail (7) en direction du cadre de charrue (5) de façon à permettre un travail du sol près de la limite, et que la machine de travail du sol (1) intégrée à l'arrière peut être basculée de façon à ce que l'outil arrière en forme d'anneau (6, 8) de la machine de travail du sol (1) intégrée conserve largement la distance latérale (9) par rapport au bord (10) des cannelures de charrue arrière (11).

2. Machine de travail du sol intégrée selon la revendication 1,
**caractérisée par le fait**
**que** les guidons (4) sont constitués sous la forme de guidons doubles (12) avec un guidon supérieur (53) et un guidon inférieur (54), qui sont disposés en position de travail en reposant parallèlement l'un à l'autre et qui peut être apporté, via un centre de réglage (42), dans une position étirée pour le processus de rotation et qui sont réalisés, pour le travail de labour, avec une force de pression dirigée vers l'arrière, sachant que la force de pression peut être de préférence modifiée.

3. Machine de travail du sol intégrée selon la revendication 1,
**caractérisée par le fait**
**que** le guidon supérieur (53) et le guidon inférieur (54) sont reliés de façon articulée avec un support pivotant (51) qui présente de son côté un palier de pivotement (44) horizontal à son extrémité opposée.

4. Machine de travail du sol intégrée selon la revendication 1,
**caractérisée par le fait**
**que** le guidon supérieur (53) et le guidon inférieur (54) sont reliés, via des articulations sphériques (23), avec le goujon fileté (65) du cadre longitudinal (3).
